# EUROPÄISCHE PATENTSCHRIFT

(11) **EP 3 246 483 B1**
(45) Veröffentlichungstag und Bekanntmachung des Hinweises auf die Patenterteilung: **12.08.2020**
(21) Anmeldenummer: 17172000.6
(22) Anmeldetag: 19.05.2017
(51) Int. Cl.: E04C 2/30, E04H 15/20, F16K 31/08

(54) **VENTIL FÜR EIN GEBÄUDEUMHÜLLUNGSELEMENT SOWIE GEBÄUDEUMHÜLLUNGSELEMENT MIT EINEM VENTIL**
VALVE FOR A BUILDING ENVELOPE ELEMENT AND BUILDING ENVELOPE ELEMENT COMPRISING A VALVE
SOUPAPE POUR UN ÉLÉMENT D'ENVELOPPE DE BÂTIMENT ET ÉLÉMENT D'ENVELOPPE DE BÂTIMENT COMPRENANT UNE SOUPAPE

(30) Priorität: 20.05.2016 DE 202016102713 U
(43) Veröffentlichungstag der Anmeldung: 22.11.2017
(73) Patentinhaber: Vector Foiltec GmbH, 28717 Bremen (DE)
(72) Erfinder: Scheidig, Florian, 20144 Hamburg (DE); Ehrentraut, Tim, 28215 Bremen (DE); Maywald, Carl, 28357 Bremen (DE)
(74) Vertreter: Eisenführ Speiser

(56) Entgegenhaltungen:
- EP-A2- 1 406 038
- DE-A1-102004 025 308
- DE-U1-202007 015 753
- US-A1- 2008 022 604
- US-B1- 6 453 619

## Beschreibung

Die Erfindung betrifft ein Ventil zur Regelung des Einlasses und/oder Auslasses eines fluiden Mediums, insbesondere Luft, in mindestens einen bzw. aus mindestens einem zwischen einer ersten Folienlage und einer zweiten Folienlage eines Folienkissens eines Gebäudeumhüllungselementes gebildeten, im Wesentlichen fluiddicht geschlossenen ersten Hohlraumes, in dem das fluide Medium mit einem Druck beaufschlagt ist, mit einem an der ersten Folienlage anbringbaren Ventilelement, das gegenüber einer in der ersten Folienlage vorgesehenen Öffnung bewegbar ausgebildet ist, und mit einem Steuerungselement, das ausgebildet ist, das Ventilelement gegenüber der Öffnung zu bewegen oder in einer die Öffnung zumindest teilweise freigebenden ersten Stellung zu halten. Ferner betrifft die Erfindung ein Gebäudeumhüllungselement mit einem Folienkissen, das eine erste Folienlage und eine zweite Folienlage aufweist, wobei die erste Folienlage mit einer Öffnung versehen ist, zwischen der ersten Folienlage und der zweiten Folienlage mindestens ein im Wesentlichen fluiddicht geschlossener erster Hohlraum gebildet ist, in dem ein fluides Medium, insbesondere Luft, enthalten ist und das fluide Medium in dem mindestens einen ersten Hohlraum mit einem Druck beaufschlagt ist, sowie mit einem Ventil wie zuvor erwähnt.

Gebäude der zuvor genannten Art werden häufig in Foliendachsystemen und Folienfassadensystemen eingesetzt. Als Anwendungsbereich kommen insbesondere große gewerbliche Bauten, wie beispielsweise Sportstadien, Veranstaltungszentren oder Einkaufszentren in Betracht. Die mit Foliendach- oder Folienfassadensystemen verbundenen Vorteile, wie insbesondere Leichtigkeit, Lichtdurchlässigkeit, Anpassbarkeit der Wärmedurchlässigkeit und/oder Gestaltbarkeit der Farbgebung, kommen bei diesen großen Dach- und Fassadenflächen besonders zur Geltung.

Die Anmelderin entwickelt, stellt her und vertreibt Gebäudeumhüllungselemente der zuvor genannten Art. Die für Gebäudeumhüllungselemente verwendeten Folienkissen weisen insbesondere eine oder zwei fluidgefüllte Kammern auf, wobei das Medium in den Kammern unter Druck steht und so das Folienkissen stabilisiert. Dazu sind die Folienlagen entlang ihrer Ränder miteinander verschweißt oder anderweitig fluiddicht miteinander verbunden und bilden zwischen sich zumindest einen im Wesentlichen fluiddicht geschlossenen Hohlraum. Weiterhin weisen vorbekannte Folienkissen oft eine Mediumsversorgungsvorrichtung auf, wie beispielsweise ein Rohr, einen Kanal oder einen Schlauch, um das fluide Medium in den Hohlraum bzw. in zumindest eine der Kammern einzuleiten. Um den Hohlraum bzw. zumindest eine der Kammern mit dem fluiden Medium befüllen oder den Hohlraum bzw. zumindest eine der Kammern entleeren zu können, sind die Gebäudeumhüllungselemente mit Folienkissen mit mindestens einem Ventil versehen. Das Ventil weist einen Ventilsitz, in dem eine Öffnung ausgebildet ist, und ein Ventilelement auf, das mit dem Ventilsitz zusammenwirkt und ausgebildet ist, in einer Schließstellung die Öffnung zu verschließen und in einer Öffnungsstellung die Öffnung freizugeben.

Der in den Kammern herrschende Druck ist für die Funktionsfähigkeit der Folienkissen, insbesondere für deren Stabilität, Isolierungswirkung und Widerstandsfähigkeit, von entscheidender Bedeutung. Dabei ist insbesondere von Bedeutung, dass der Druck innerhalb des Hohlraums bzw. zumindest einer der Kammern und/oder das Druckverhältnis zwischen zwei Kammern in einem bestimmten Wertebereich liegt. Wenn der Druck innerhalb des Hohlraums bzw. zumindest einer der Kammern zu niedrig ist, kann die Stabilität und Isolationswirkung des Folienkissens leiden. Sollte der Druck zu hoch sein, besteht die Gefahr einer Beschädigung oder sogar Zerstörung des Folienkissens. Somit ist die Regelung des Drucks in dem Hohlraum bzw. zumindest einer der Kammern sowohl während der initialen Befüllung des Folienkissens als auch zur Aufrechterhaltung bzw. Widerherstellung des Drucks im Einbauzustand der Gebäudeumhüllungselemente von Bedeutung.

Das Ventil ermöglicht dabei den Ein- und Auslass eines fluiden Mediums in einen und aus einem Hohlraum bzw. in zumindest eine und aus zumindest einer Kammer. Dabei ist jedoch von Nachteil, dass die Füllmenge und/oder der Druck innerhalb des Hohlraums bzw. zumindest einer der Kammern während des Befüllens überwacht werden muss, um ein Über- oder Unterschreiten der Sollfüllmenge und damit des Solldrucks innerhalb des Hohlraumes bzw. zumindest einer der Kammern zu vermeiden. Insbesondere bei einer Vielzahl von für ein Foliendach oder Folienfassadensystem erforderlichen Gebäudeumhüllungselementen, deren Druck sowohl erstmalig aufgebaut als auch im Einbauzustand regelmäßig bzw. kontinuierlich überwacht und gegebenenfalls korrigiert werden muss, ist dies aufwändig und fehleranfällig.

Die DE 10 2004 025 308 A1 offenbart ein System zur Regelung der Druckluftversorgung für ein Gebäudeumhüllungselement mit einem Folienkissen, bei welchem eine Druckluftversorgungsleitung, die über Zweigleitungen jeweils an einen oberen Hohlraum, der von einer oberen Folienlage und einer mittleren Folienlage begrenzt wird, und an einen unteren Hohlraum, der von der mittleren Folienlage und einer unteren Folienlage begrenzt wird, angeschlossen ist. In jeder dieser beiden Zweigleitungen sitzt ein Ventil. Bei diesen Ventilen handelt es sich jeweils um ein Magnetventil, das einen Ventilsitz, eine Spule und eine mit Hilfe der Spule beweglichen Schließkörper aufweist. Die Magnetventile werden von einer Leitwarte anhand von ermittelten Druckmesswerten über eine zur Spule führende Signalleitung entsprechend angesteuert. Somit wird bei Stromfluss durch die Spule ein Magnetfeld erzeugt, das eine Bewegung des Schließkörpers wahlweise in eine geschlossene Stellung oder eine geöffnete Stellung bewirkt.

Zur Verbesserung der Druckregelung schlägt die DE 20 2007 015 753 U1, welche alle Merkmale in der Präambel des Anspruchs 1 zeigt, vor, das Ventil mit einem dort als Aktivierungsmittel bezeichneten Steuerungselement, das ausgebildet ist, das dort als Absperrkörper bezeichnete Ventilelement vom Ventilsitz zu lösen und das Ventil zu öffnen, wenn der Abstand zwischen der Folienlage, an der das Ventil angeordnet ist, und der zu dieser Folienlage benachbarten Folienlage einen Grenzwert unterschreitet, sowie mit einem Schließmittel zu versehen, das ausgebildet ist, das Ventilelement gegen den Ventilsitz zu pressen und damit das Ventil zu schließen, wenn der genannte Abstand einen Grenzwert überschreitet. Demnach ist im geschlossenen Zustand des Ventils das Steuerungselement vom Ventilelement beabstandet, und das Ventilelement wird durch das Schließmittel gegen den Ventilsitz gepresst. Denn wenn der in dem mindestens einen Hohlraum ausgebildete Druck ausreichend groß ist bzw. einen vorbestimmten Solldruck überschreitet, wird der Abstand zwischen den beiden Folienlagen so groß, dass das Steuerungselement nicht mehr auf das Ventilelement wirkt, sondern das Ventilelement von der Schließkraft des Schließmittels gegen den Ventilsitz gepresst wird und dadurch das Ventil schließt. Das Schließmittel kann beispielsweise eine entsprechend angeordnete Feder mit einer bestimmten Federkraft sein, die als Schließkraft das Ventilelement gegen den Ventilsitz presst. Ist demgegenüber noch kein oder nur ein sehr geringer Druck im Hohlraum aufgebaut, wird das Steuerungselement von einer der Folienlagen gegen das Ventilelement gedrückt, wodurch sich das Ventilelement entgegen der Schließkraft vom Ventilsitz löst und das Ventil öffnet. Solange der Druck innerhalb des Hohlraumes gering ist und damit das Ventil geöffnet ist, kann Fluid von außen oder aus einem angeschlossenen Fluidbehälter durch das Ventil in den Hohlraum strömen, wodurch der Druck in dem Hohlraum sukzessive ansteigt. Wenn sich durch den zunehmenden Druck im Hohlraum die den Hohlraum begrenzenden beiden Folienlagen immer weiter voneinander entfernen, entfernt sich auch das an einer der beiden Folienlagen befestigte Steuerungselement vom Ventilelement; dies führt dazu, dass sich das Steuerungselement vom Ventilelement löst und dann das Ventilelement wieder durch die vom Schließmittel erzeugte Schließkraft gegen den Ventilsitz gepresst wird. Demnach lässt sich durch die Verwendung eines mechanischen Steuerungselementes auf einfache Weise eine wirksame Druckregelung realisieren. Da somit die druckabhängige Ventilbetätigung mechanisch erfolgt, ist eine Stromversorgung nicht erforderlich und die Druckregelung stets verfügbar. Eine von außen gesteuerte aktive Regelung des Drucks im Folienkissen kann entfallen. Außerdem erlaubt diese bekannte Konstruktion eine sehr häufig und vielfach wiederholte Betätigung des Ventils, um auf Druckveränderungen entsprechend schnell zu reagieren. EP1406038 A2 beschreibt ein Überdruckventil welches dazu geeignet ist an einer flexiblen Folienlage angebracht zu werden und welches bei Überdruck öffnet. Hierzu werden magnetische Elemente bzw. Streifen eingesetzt, welche bei Überschreiten der Haltekraft dazu führen, dass eine Lasche die Öffnung, an der das Überdruckventil angebracht wird, freigibt. Das Ventil der EP1406038 A2 ist jedoch nicht dazu geeignet, über den sich im Falle einer Druckveränderung einstellenden Folienabstand zweier Folien eines Folienkissens angesteuert zu werden.

Auch wenn sich das Ventil in der zuvor beschriebenen Ausführung in der Praxis mittlerweile gut bewährt hat, besteht Bedarf, die Konstruktion des Ventils weiter zu vereinfachen und somit zu verbessern.

Vorgeschlagen wird zur Lösung dieser Aufgabe gemäß einem ersten Aspekt der Erfindung ein Ventil zur Regelung des Einlasses und/oder Auslasses eines fluiden Mediums, insbesondere Luft, in mindestens einen bzw. aus mindestens einem zwischen einer ersten Folienlage und einer zweiten Folienlage eines Folienkissens eines Gebäudeumhüllungselementes gebildeten, im Wesentlichen fluiddicht geschlossenen ersten Hohlraumes, in dem das fluide Medium mit einem Druck beaufschlagt ist, mit einem an der ersten Folienlage anbringbaren Ventilelement, das gegenüber einer in der ersten Folienlage vorgesehenen Öffnung bewegbar ausgebildet ist, und mit einem Steuerungselement, das ausgebildet ist, das Ventilelement gegenüber der Öffnung zu bewegen oder in einer die Öffnung zumindest teilweise freigebenden ersten Stellung zu halten, dadurch gekennzeichnet, dass das Ventilelement magnetisierbares Material und das Steuerungselement magnetisches Material aufweist oder das Ventilelement magnetisches Material und das Steuerungselement magnetisierbares Material aufweist oder das Ventilelement und das Steuerungselement jeweils magnetisches Material aufweisen und das Steuerungselement zur Anordnung an der zweiten Folienlage in einem Abstand ausgebildet ist.

Demnach nutzt die Erfindung den Magnetismus zur Betätigung des Ventils. Dies wird erfindungsgemäß dadurch erreicht, dass (1.) das Ventilelement magnetisierbares Material und das Steuerungselement magnetisches Material aufweist oder (2.) das Ventilelement magnetisches Material und das Steuerungselement magnetisierbares Material aufweist oder (3.) das Ventilelement und das Steuerungselement gleichermaßen jeweils magnetisches Material aufweisen. Während im Stand der Technik die Betätigung des Ventils durch mechanische Beaufschlagung des Ventilelementes mit dem Steuerungselement stattfindet, indem das Ventilelement durch das Steuerungselement vom Ventilsitz gelöst wird und dadurch die Öffnung des Ventils freigibt, erfolgt somit bei der Erfindung die Beeinflussung des Ventilelementes durch das Steuerungselement in berührungsloser Weise unter Einsatz von Magnetismus. Vom Ventilelement und Steuerungselement muss mindestens eines dieser beiden Elemente magnetisches Material aufweisen, von dem (ggf. nach einer einmaligen Magnetisierung) ständig ein Magnetfeld ausgeht (Permanentmagnet); bei einem solchen Material, das auch als hartmagnetisch bezeichnet wird, handelt es sich demnach um einen Werkstoff, der von Hause aus magnetisch ist und ein Magnetfeld erzeugt. Demgegenüber ist magnetisierbares Material in feldfreier Umgebung nicht magnetisch; aber sobald es in die Nähe eines magnetischen Materials und somit in die Umgebung eines Magnetfelds kommt, wird es auch magnetisch, während sich diese Magnetisierung zumindest zum größten Teil sofort wieder verliert, wenn es vom magnetischen Material und somit aus dem externen Magnetfeld wieder entfernt wird. Magnetisierbares Material wird alternativ auch als ferromagnetisch oder weichmagnetisch bezeichnet.

Ferner ist das Steuerungselement zur Anordnung an der zweiten Folienlage in einem Abstand ausgebildet. Denn bei Druckschwankungen in dem von den beiden Folienlagen begrenzten Hohlraum verändert sich dementsprechend der Abstand zwischen den beiden Folienlagen und somit auch zwangsläufig der Abstand zwischen dem Ventilelement und dem Steuerungselement, sodass bei Erreichen eines vorgegebenen Schwellwertes das Ventilelement in den Einflussbereich des Steuerungselementes gelangt. Eine solche Anordnung ist vorteilhaft, da der Abstand zwischen den beiden Folienlagen von dem im Hohlraum herrschenden Druck abhängig ist und bei Änderungen des Druckes variiert, was dementsprechend einen unmittelbaren Einfluss auf den Abstand zwischen dem Steuerungselement und dem Ventilelement hat. Somit resultiert eine Veränderung des Abstandes zwischen dem Steuerungselement und dem Ventilelement direkt aus der Veränderung des Druckes, sodass das Ventilelement sozusagen ohne jegliche Verzögerung in den magnetischen Einflussbereich des Steuerungselementes gelangt, insbesondere wenn der Abstand zwischen dem Ventilelement und dem Steuerungselement einen vorgegebenen Schwellwert erreicht.

Bevorzugte Ausführungen und Weiterbildungen der Erfindung sind in den abhängigen Ansprüchen 2 bis 18 angegeben.

So ist das Ventilelement relativ zur Öffnung bevorzugt zwischen der ersten Stellung und einer zweiten Stellung verbringbar, wobei es die Öffnung in der ersten Stellung stärker als in der zweiten Stellung freigibt, und zweckmäßigerweise der Abstand zumindest eines freien Endes des Ventilelementes von der Öffnung in der ersten Stellung größer als in der zweiten Stellung ist.

Die Wirkung des Magnetismus und der daraus erzeugten Magnetkraft nimmt mit zunehmender Entfernung überproportional ab und mit abnehmender Entfernung überproportional zu und ist bei Berührung der magnetischen Körper (Entfernung = 0) am höchsten. Diese Erkenntnis macht sich eine Weiterbildung der zuvor genannten Ausführung zunutze, um einen vorgegebenen Schwellwert zu definieren, den der Abstand zwischen dem Ventilelement und dem Steuerungselement erreichen muss, um die durch den Magnetismus erzeugte Kraft vom Steuerungselement auf das Ventilelement wirken zu lassen. Dadurch lässt sich eine einfache und zugleich wirksame Konstruktion realisieren. Schließlich ist auch die erfindungsgemäße Lösung flexibler als die bekannte Konstruktion; denn während bei der bekannten Konstruktion das Ventilelement durch mechanischen Eingriff vom Steuerungselement nur in Öffnungsrichtung mitgenommen werden kann, lässt sich bei der erfindungsgemäßen Lösung bei Bedarf wahlweise das magnetische und ferromagnetische Material so anpassen, dass entweder eine abstoßende Magnetkraft oder eine anziehende Magnetkraft erzeugt wird. Dadurch lässt sich der Schwellwert wahlweise als unterer Grenzwert oder oberer Grenzwert einrichten. Somit lässt sich bei der Erfindung das Steuerungselement nicht nur zum Öffnen, sondern wahlweise auch zum Schließen des Ventilelementes einsetzen.

Bevorzugt lässt sich das Ventilelement so ausgestalten, dass es in seine erste Stellung in eine Richtung vom Steuerungselement weg und in seine zweite Stellung in Richtung auf das Steuerungselement zu verbringbar ist. Bei einer ersten Weiterbildung dieser Ausführung ist das magnetische Material derart ausgebildet, das es eine abstoßende Kraft erzeugt, durch die das Ventilelement in seine erste Stellung verbracht wird, wenn der Abstand zum Steuerungselement den vorgegebenen Schwellwert unterschreitet. Bei einer alternativen zweiten Weiterbildung dieser Ausführung ist das magnetische Material derart ausgebildet, dass es im Gegensatz zur ersten Weiterbildung keine abstoßende Kraft, sondern eine Anziehungskraft erzeugt, durch die das Ventilelement in seine zweite Stellung verbracht wird, wenn dessen Abstand zum Steuerungselement den vorgegebenen Schwellwert unterschreitet.

Bei einer alternativen Ausführung ist das Ventilelement so ausgebildet, dass es im Gegensatz zur ersten Ausführung in seine erste Stellung in Richtung auf das Steuerungselement und in seine zweite Stellung in einer Richtung vom Steuerungselement weg verbringbar ist. Bei einer ersten Weiterbildung dieser zweiten Ausführung ist das magnetische Material derart ausgebildet, dass es eine abstoßende Kraft erzeugt, durch die das Ventilelement in seine zweite Stellung verbracht wird, wenn dessen Abstand zum Steuerungselement den vorgegebenen Schwellwert unterschreitet. Bei einer alternativen zweiten Ausführung ist das Ventilelement derart angeordnet, dass es im Gegensatz zur ersten Ausführung in seine erste Stellung in Richtung auf das Steuerungselement und in seine zweite Stellung in einer Richtung vom Steuerungselement weg verbringbar ist. Bei einer alternativen zweiten Weiterbildung dieser Ausführung ist das magnetische Material derart ausgebildet, dass es im Gegensatz zur ersten Weiterbildung keine abstoßende Kraft, sondern eine Anziehungskraft erzeugt, durch die das Ventilelement in seine erste Stellung verbracht wird, wenn dessen Abstand zum Steuerungselement den vorgegebenen Schwellwert unterschreitet.

Zweckmäßigerweise ist das Ventilelement zwischen einer maximalen Öffnungsstellung, in der die Öffnung im Wesentlichen vollständig freigegeben ist, und einer Schließstellung, in der die Öffnung vom Ventilelement verschlossen wird, verbringbar. Dabei kann sich bevorzugt die erste Stellung zwischen der Schließstellung und der maximalen Öffnungsstellung befinden, was vorzugsweise auch in gleicher Weise für die zweite Stellung gelten kann. Alternativ kann sich die erste Stellung des Ventilelementes als maximale Öffnungsstellung und die zweite Stellung des Ventilelementes als Schließstellung definieren lassen.

Das Ventilelement sollte zweckmäßigerweise an der ersten Folienlage beweglich angeordnet sein. Bei einer Weiterbildung dieser Ausführung ist es von Vorteil, das magnetische oder ferromagnetische Material am Ventilelement im Bereich dessen freien Endes oder benachbart zu dessen freiem Ende vorzusehen, um bei gegebener Magnetkraft ein verhältnismäßig hohes Schwenkmoment für ein sicheres Verbringen zwischen der ersten Stellung und der zweite Stellung zu erzeugen. Bevorzugt kann das Ventilelement als flexible oder elastische Lasche ausgebildet sein, die mit ihrem einen Ende an der Folienlage zu befestigen und mit ihrem anderen Ende gegenüber der Ventilöffnung bewegbar ist. Eine konstruktiv besonders einfache, jedoch wirkungsvolle Weiterbildung besteht ferner darin, das Ventilelement zumindest abschnittsweise aus Folienmaterial herzustellen.

Gemäß einem zweiten Aspekt der Erfindung wird die vorstehende Aufgabe gelöst mit einem Gebäudeumhüllungselement mit einem Folienkissen, das eine erste Folienlage und eine zweite Folienlage aufweist, wobei die erste Folienlage mit einer Öffnung versehen ist, zwischen der ersten Folienlage und der zweiten Folienlage mindestens ein im Wesentlichen fluiddicht geschlossener erster Hohlraum gebildet ist, in dem ein fluides Medium, insbesondere Luft, enthalten ist und das fluide Medium in dem mindestens einen ersten Hohlraum mit einem Druck beaufschlagt ist, und mit einem Ventil gemäß einem ersten Aspekt der Erfindung, dessen Ventilelement gegenüber der Öffnung in der ersten Folienlage bewegbar ist. Während das Ventilelement in der den Hohlraum begrenzenden ersten Folienlage ausgebildet ist, ist das Steuerungselement an in der den Hohlraum begrenzenden zweiten Folienlage angeordnet. Eine solche Anordnung ist vorteilhaft, da der Abstand zwischen den beiden Folienlagen von dem im Hohlraum herrschenden Druck abhängig ist und bei Änderungen des Druckes variiert, was dementsprechend einen unmittelbaren Einfluss auf den Abstand zwischen dem Steuerungselement und dem Ventilelement hat. Somit resultiert eine Veränderung des Abstandes zwischen dem Steuerungselement und dem Ventilelement direkt aus der Veränderung des Druckes, sodass das Ventilelement sozusagen ohne jegliche Verzögerung in den magnetischen Einflussbereich des Steuerungselementes gelangt, insbesondere wenn der Abstand zwischen dem Ventilelement und dem Steuerungselement einen vorgegebenen Schwellwert erreicht.

Bevorzugte Ausführungen der Erfindung gemäß dem zweiten Aspekt sind in den abhängigen Ansprüchen 20 bis 21 angegeben.

Bevorzugt kann die Anordnung derart getroffen sein, dass das Steuerungselement aufgrund des Magnetismus das Ventilelement so beeinflusst, dass das Ventilelement bei steigendem Druck im Hohlraum die Öffnung stärker freigibt, also mehr bzw. weiter öffnet und somit eine Vergrößerung des effektiven Öffnungsquerschnittes bewirkt, wodurch mehr fluides Medium bzw. Luft aus dem Hohlraum entweicht. Dies wiederum hat zur Folge, dass der Druck im Hohlraum sinkt, wobei für diesen Fall die Anordnung derart getroffen ist, dass bei abnehmendem Druck im Hohlraum das Steuerungselement aufgrund des Magnetismus das Ventilelement so beeinflusst, dass es eine Verkleinerung des effektiven Öffnungsquerschnittes bewirkt und somit die Öffnung sozusagen stärker schließt. Dies führt zu einem Anstieg des im Hohlraum herrschenden Druckes. Auf diese Weise entsteht letztendlich ein Gleichgewicht, das dafür sorgt, dass der Einfluss des Magnetismus auf das Ventilelement gerade etwa so groß ist, dass das Ventilelement in einer Stellung gehalten wird, in der der durch die Öffnung gezielt verursachte Druckverlust etwa von einem Druckanstieg im Hohlraum ausgeglichen wird. Dieser Zustand lässt sich insbesondere dann erreichen, wenn der Hohlraum ständig mit fluidem Medium bzw. Luft versorgt wird.

Eine bevorzugte Ausführung des Gebäudeumhüllungselementes weist eine dritte Folienlage auf, die die Außenseite einer Gebäudehülle bildet, während die zweite Folienlage die Innenseite einer Gebäudehülle und die erste Folienlage eine zwischen der zweiten Folienlage und der dritten Folienlage angeordnete mittlere Folienlage bildet, so dass zwischen der ersten Folienlage und der zweiten Folienlage eine erste Kammer und zwischen der ersten Folienlage und der dritten Folienlage eine zweite Kammer gebildet ist, sowohl die erste Kammer als auch die zweite Kammer im Wesentlichen fluiddicht geschlossen ist, sowohl in der ersten Kammer als auch in der zweiten Kammer ein fluides Medium, insbesondere Luft, enthalten ist und das fluide Medium in der ersten Kammer mit einem ersten Druck und das fluide Medium in der zweiten Kammer mit einem zweiten Druck beaufschlagt ist. Bei dieser Ausführung ist das mindestens eine Ventil gemäß dem ersten Aspekt der Erfindung derart angeordnet, dass es den Ein- und Auslass des Mediums in eine bzw. aus einer der beiden Kammern regelt. Bei einer Weiterbildung dieser Ausführung ist das Ventilelement des mindestens einen Ventils an der mittleren ersten Folienlage angeordnet und regelt somit das Ventil den Fluss des Mediums zwischen der zweiten Kammer und der ersten Kammer. Dadurch lassen sich auf geschickte Weise Druckänderungen zwischen den beiden Kammern regeln oder ausgleichen, ohne dass im Wesentlichen weiteres fluides Medium von außen zugeführt werden muss. Alternativ ist es aber auch denkbar, die eine Kammer an eine Quelle von fluidem Medium bzw. eine Druckluftquelle anzuschließen, wodurch diese Kammer ständig unter Druck

gehalten und bei Bedarf mit neuem fluidem Medium versorgt wird, während die andere Kammer ein Entlüftungsventil aufweist, durch das überschüssiges fluides Medium entweichen und somit überschüssiger Druck abgelassen werden kann. Somit lässt sich der zuvor beschriebene Gleichgewichtseffekt besonders vorteilhaft auch mit dieser Ausführung erzielen.

Nachfolgend wird ein bevorzugtes Ausführungsbeispiel anhand der beiliegenden Zeichnungen näher erläutert. Es zeigen:
- Fig. 1: ein Gebäudeumhüllungselement schematisch im Querschnitt;
- Fig. 2: in einer ausschnittsweise vergrößerten Abbildung einen Abschnitt des Gebäudeumhüllungselementes von Fig. 1 mit Darstellung einer an eine Mediumsversorgungsvorrichtung angeschlossenen Zufuhrleitung und eines Ventils im geschlossenen Zustand;
- Fig. 3: in einer ausschnittsweise vergrößerten Abbildung einen Abschnitt des Gebäudeumhüllungselementes von Fig. 1 mit Darstellung der an eine Mediumsversorgungsvorrichtung angeschlossenen Zufuhrleitung und des Ventils im geöffneten Zustand; und
- Fig. 4: eine schematische Darstellung einer bevorzugten Ausführung des Ventils in Draufsicht (a), im Längsschnitt im geschlossenen Zustand (b) und im Längsschnitt im geöffneten Zustand (c).

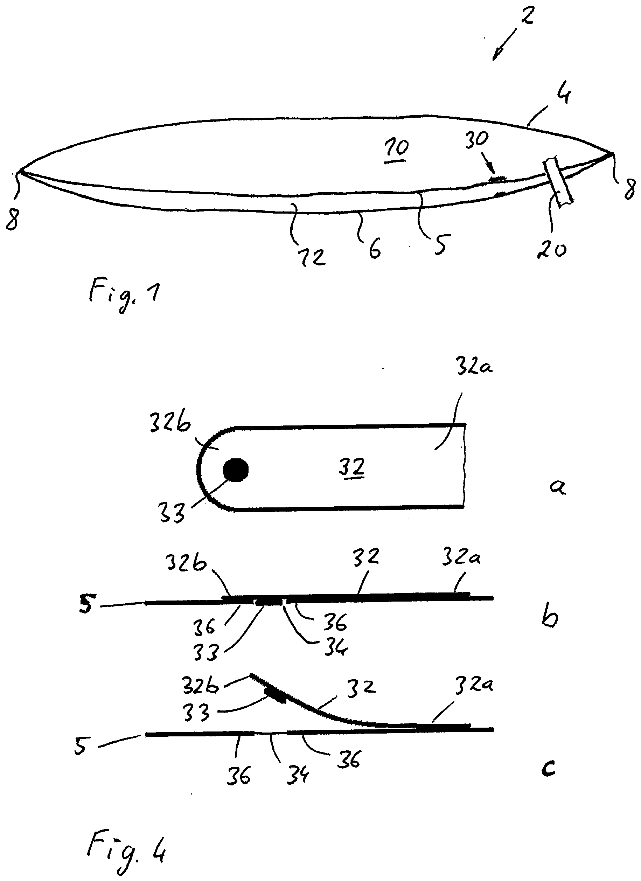

In Fig. 1 ist schematisch im Querschnitt ein Gebäudeumhüllungselement 2 abgebildet, das mit einer Vielzahl weiterer Gebäudeumhüllungselemente ein Foliendach- bzw. Folienfassadensystem bilden kann. Das Gebäudeumhüllungselement 2 weist eine obere bzw. äußere Folienlage 4, eine mittlere Folienlage 5 und eine untere bzw. innere Folienlage 6 auf. Die Folienlagen 4 bis 6 sind entlang ihrer Ränder 8 miteinander verschweißt. Zwischen der äußeren Folienlage 4 und der mittleren Folienlage 5 ist eine erste, im Wesentlichen fluiddichte Kammer 10 gebildet. Zwischen der mittleren Folienlage 5 und der inneren Folienlage 6 ist eine zweite, ebenfalls im Wesentlichen fluiddichte Kammer 12 gebildet. Weiterhin weist das Gebäudeumhüllungselement 2 in der dargestellten Ausführung eine Zufuhrleitung 20 auf, die an eine nicht dargestellte Mediumsversorgungseinrichtung angeschlossen ist. Schließlich lässt Fig. 1 schematisch noch ein Ventil 30 erkennen.

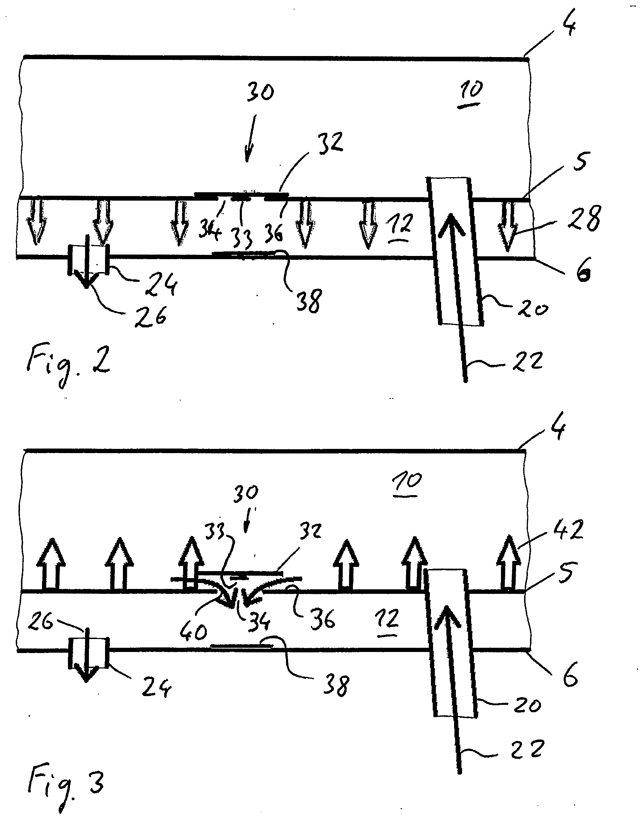

Durch die Zufuhrleitung 20 wird im Wesentlichen ständig fluides Medium, bevorzugt Gas und besonders bevorzugt Luft im dargestellten Ausführungsbeispiel der oberen ersten Kammer 10 zugeführt, wie der Pfeil 22 in den Figuren 2 und 3 zu erkennen gibt. Wie die Figuren 2 und 3 ferner erkennen lassen, ist im dargestellten Ausführungsbeispiel in der unteren bzw. inneren Folienlage 6 ein sog. Spülventil 24 angeordnet, durch das aus der unteren zweiten Kammer 12 im Wesentlichen dauerhaft Luft ausströmt.

Wie die Figuren 2 bis 4 desweiteren erkennen lassen, weist das Ventil 30 ein Ventilelement 32 auf, das mit einem Magnetkörper 33 versehen und im dargestellten Ausführungsbeispiel an der die beiden Kammern 10, 12 voneinander trennenden mittleren Folienlage 5 angeordnet ist. Ferner weist das Ventil 30 eine Öffnung 34, die vom Ventilelement 32 verschließbar ist, und einen Ventilsitz 36 auf, der in der mittleren Folienlage 5 ausgebildet ist, die Öffnung 34 enthält und zur berührenden und zugleich dichtenden Auflage des Ventilelementes 32 in der Schließstellung gemäß Figur 2 vorgesehen ist.

Eine bevorzugte Ausgestaltung des Ventilelementes 32 ist beispielhaft in Figur 4 gezeigt. Hiernach ist das Ventilelement 32 als bewegliche Lasche ausgebildet, die mit ihrem einen Ende 32a an der Folienlage 5 befestigt ist, wobei die Befestigung beispielsweise durch Verschweißen oder Verkleben realisiert werden kann. Das laschenförmige Ventilelement 32 besteht aus einem flexiblen oder elastischen Material und kann bevorzugt das gleiche Material wie die Folienlage 5 und somit entsprechendes Folienmaterial aufweisen. Somit ist das freie zweite Ende 32b gegenüber der Folienlage 5 frei beweglich. Der Magnetkörper 33 ist im dargestellten Ausführungsbeispiel als scheibenförmiges Plättchen ausgebildet und im Bereich des freien Endes 32b des Ventilelementes 32 derart angeordnet, dass er im Schließzustand des Ventilelementes 32 gemäß Figur 4b innerhalb der vom Ventilelement 32 verschlossenen Öffnung 34 liegt, wie Figur 5b erkennen lässt. Beim Verschließen des Ventils liegt gemäß Figur 4b das Ventilelement 32 mit seinem Abschnitt im Bereich des freien Endes 32b und benachbart zum freien Ende 32b im Wesentlichen plan in dichtender Anlage auf dem die Öffnung 34 umgebenden Ventilsitz 36 auf. Während Figur 4b das Ventilelement 32 in seiner Schließstellung zeigt, zeigt Figur 4c das Ventilelement 32 in einer Stellung, in der es mit dem genannten Abschnitt vom Ventilsitz 36 abgehoben ist und somit die Öffnung 34 zumindest teilweise freigibt.

Der Ventilsitz 36 ist vorzugsweise als kreisförmiger, flacher Kunststoffring ausgebildet. Die flache Ausgestaltung von sowohl Ventilsitz 36 als auch Ventilelement 32 hat den Vorteil, insbesondere bei Transport und Montage der Folienkissen 2 im nicht oder nur gering gefüllten Zustand nur wenig Platz einzunehmen und wenige Möglichkeiten einer Beschädigung der Folienlagen 4 bis 6, beispielsweise durch Spitzen oder scharfen Kanten, zu bieten. Weiterhin sind entsprechende Kunststoffelemente leicht und außerdem wirtschaftlich in der Herstellung.

Wie wiederum die Figuren 2 und 3 erkennen lassen, weist das Ventil 30 noch ein weiteres Element auf, das mit dem Bezugszeichen "38" gekennzeichnet und an der unteren bzw. inneren Folienlage 6 angeordnet ist. Bei diesem Element handelt es sich um ein Steuerungselement 38, das die Bewegung des Ventilelementes 32 in nachfolgend noch näher beschriebener Weise beeinflusst. Das Steuerungselement 38 ist im dargestellten Ausführungsbeispiel als plättchenförmiger Körper ausgebildet und an der in die zweite Kammer 12 weisenden Innenseite der unteren bzw. inneren Folienlage 6 angeordnet. Ähnlich wie der Magnetkörper 33 weist auch das Steuerungselement 38 magnetisches Material auf, so dass zwischen dem Magnetkörper 33 am Ventilelement 32 und dem Steuerungselement 38 eine magnetische Wechselwirkung auftritt, wodurch in nachfolgend noch näher beschriebener Weise das Ventilelement 32 mit einer Kraft beaufschlagt werden kann.

Im Betrieb wird durch die Zufuhrleitung 20 im Wesentlichen ständig der oberen bzw. ersten Kammer 10 Luft zugeführt. Dadurch kann sich der Druck in der oberen ersten Kammer 10 und somit auch gegenüber dem Druck in der unteren zweiten Kammer 12 erhöhen, was auch zu einem entsprechenden Anstieg der Druckdifferenz gegenüber der unteren zweiten Kammer 12 führen kann. Da das Ventilelement 32 an der zur oberen ersten Kammer 10 weisenden Seite der mittleren Folienlage 5 angeordnet ist, kann der zuvor beschriebene Druckanstieg im Extremfall dazu führen, dass das Ventilelement 32 gegen den Ventilsitz 36 gepresst und dadurch das Ventil 30 geschlossen wird (sofern es nicht bereits geschlossen ist).

Ferner kann der Anstieg der Druckdifferenz zugunsten der oberen ersten Kammer 10 noch dadurch verstärkt werden, dass die untere zweite Kammer 12 über das Spülventil 24 Luft verliert. Durch die Druck- und Volumenänderungen in den Kammern 10, 12 kann sich die Lage der mittleren Folie 5 mit dem Ventil 30 entsprechend verändern. Durch den Anstieg der Druckdifferenz zugunsten der oberen ersten Kammer 10 wird nämlich die mittlere Folienlage 5 immer stärker mit einem Druck in Richtung auf die untere zweite Kammer 12 und die innere Folienlage 6 beaufschlagt, wie durch die Pfeile 28 in Figur 2 angedeutet ist. Dies wiederum führt dazu, dass die mittlere Folienlage 5 in Richtung auf die untere bzw. innere Folienlage 6 gedrückt wird, wodurch sich der Abstand zwischen der mittleren Folienlage 5 und der inneren Folienlage 6 verringern kann. Dadurch kann sich das Ventilelement 32 mit seinem Magnetkörper 33 dem Steuerungselement 38 annähern. Im beschriebenen Ausführungsbeispiel sind der Magnetkörper 33 am Ventilelement 32 und der magnetische Werkstoff des Steuerungselementes 38 so ausgebildet, dass bei Annährung aneinander eine entgegengesetzt wirkende magnetische Kraft entsteht; somit sind das Magnetplättchen 33 und das Steuerungselement 38 auf Abstoßung angeordnet. Übersteigt bei zunehmender Annäherung der mittleren Folienlage 5 an die innere Folienlage 6 die sich dadurch verstärkende Abstoßungskraft zwischen dem Steuerungselement 38 und dem Magnetkörper 33 am Ventilelement 32 die auf die mittlere Folienlage 5 wirkende Druckkraft, kann sich nun das Ventil 30 weiter öffnen oder kann im Extremfall das Ventilelement 32 aus seiner Schließstellung gemäß Fig. 2 gelöst werden. Denn aufgrund der dann stärker werdenden abstoßenden magnetischen Wirkung des Steuerungselementes 38 auf den Magnetkörper 33 wird das Ventilelement 32 vom Ventilsitz 36 weg in die obere erste Kammer 10 hinein beaufschlagt und kann somit die Öffnung 34 im Ventilsitz 36 freigeben oder zumindest stärker freigeben, was zu einer Vergrößerung des effektiven Querschnittes der Öffnung 34 führen kann . In den Figuren 3 und 4c ist das Ventilelement 32 in einer solchen Stellung gezeigt,.

Das Öffnen oder weitere Öffnen des Ventils 30, wodurch Luft oder mehr Luft aus der oberen ersten Kammer 10 in die untere zweite Kammer 12 strömen kann, was in Figur 3 durch die Pfeile 40 angedeutet ist, hat zur Folge, dass der Druck in der oberen ersten Kammer 10 abnimmt und in der unteren zweiten Kammer 12 steigt, wodurch die Druckdifferenz zugunsten der oberen ersten Kammer 10 abnimmt. Gleichzeitig kann das Luftvolumen in der unteren zweiten Kammer 12 zunehmen, wodurch sich die mittlere Folie 5 mit dem Ventil 30 langsam von der inneren bzw. unteren Folienlage 6 wieder entfernen kann, wie durch die Pfeile 42 in Figur 3 angedeutet ist. Dies hat zur Folge, dass sich auch der Magnetkörper 33 des geöffneten Ventilelementes 32 vom Steuerungselement 38 wieder entfernen kann. Dabei nimmt die Abstoßungskraft zwischen dem Steuerungselement 38 und dem Magnetkörper 33 am geöffneten Ventilelement 32 wieder ab. Wenn dann die magnetische Abstoßungskraft unter den Betrag des in der oberen ersten Kammer 10 auf das Ventilelement 32 wirkenden Druckes sinkt, kehren sich die Kräfteverhältnisse um. Denn nun sorgt der in der oberen ersten Kammer 10 auf das Ventilelement 32 wirkende Druck dafür, dass das Ventilelement 32 wieder in Richtung auf die mittlere Folienlage 5 beaufschlagt und somit von seiner in Figur 3 gezeigten ersten Stellung, die im Extremfall seine Öffnungsstellung bildet, in Richtung auf eine zweite Stellung bewegt wird , bei der es sich in der in Fig. 2 gezeigten Situation um seine Schließstellung handelt.

In dem zuvor beschriebenen Vorgang muss die erwähnte erste Stellung des Ventilelementes 32 nicht zwangsläufig dessen vollständige Öffnungsstellung und die ebenfalls zuvor erwähnte zweite Stellung des Ventilelementes 32 nicht zwangsläufig die in Fig. 2 gezeigte Schließstellung bilden, sondern können die ersten und zweiten Stellungen auch zwischen der vollständigen Öffnungsstellung und der Schließstellung liegen, so dass die Bewegung des Ventilelementes 32 zwischen der ersten Stellung und der zweiten Stellung in einem Bereich stattfinden kann, der kürzer als der Abstand zwischen der vollständigen Öffnungsstellung und der in Fig. 2 gezeigten Schließstellung ist.

Zweckmäßigerweise ist die Anordnung derart getroffen, dass das Steuerungselement 38 aufgrund des Magnetismus das Ventilelement 32 so beeinflusst, dass das Ventilelement 32 bei steigendem Druck in der oberen ersten Kammer 10 die Öffnung 34 stärker freigibt, also weiter öffnet und somit eine Vergrößerung des effektiven Öffnungsquerschnittes der Öffnung 34 bewirkt, wodurch mehr Luft aus der oberen ersten Kammer 10 in die untere zweite Kammer 12 entweicht. Dies wiederum hat zur Folge, dass der Druck in der oberen ersten Kammer 10 sinkt, wobei für diesen Fall die Anordnung derart getroffen ist, dass bei abnehmendem Druck in der oberen ersten Kammer 10 das Steuerungselement 38 aufgrund des Magnetismus das Ventilelement 32 so beeinflusst, dass es eine Verkleinerung des effektiven Öffnungsquerschnittes der Öffnung 34 bewirkt und somit die Öffnung 34 sozusagen stärker schließt. Dies führt zu einem Anstieg des in der oberen ersten Kammer 10 herrschenden Druckes. Auf diese Weise entsteht letztendlich ein Gleichgewicht, in dem die Bewegung des freien Endes 32b des Ventilelementes 32 zwischen den zuvor erwähnten ersten und zweiten Stellungen immer kürzer wird und somit der Abstand zwischen den ersten und zweiten Stellungen abnimmt, bis das Ventilelement 32 mit seinem freien Ende 32b im Wesentlichen in einer im Wesentlichen festen Stellung verharrt, in der die ersten und zweiten Stellungen im Wesentlichen zusammen fallen und die Öffnung 34 vom Ventilelement 32 teilweise freigegeben bzw. geöffnet ist. In diesem Gleichgewichtszustand ist der Einfluss des Magnetismus auf das Ventilelement 32 gerade etwa so groß, dass es in der erwähnten, die Öffnung 34 teilweise freigebenden Stellung gehalten wird, in der der durch die Öffnung 34 gezielt verursachte Druckverlust etwa von einem Druckanstieg in der ersten oberen Kammer 10 ausgeglichen wird. Letzeres lässt sich im dargestellten Ausführungsbeispiel dadurch erreichen, dass durch die Zufuhrleitung 20 im Wesentlichen ständig Luft der oberen ersten Kammer 10 zugeführt wird, wie der Pfeil 22 in den Figuren 2 und 3 erkennen lässt. Auf diese Weise wird die obere erste Kammer 10 ständig unter Druck gehalten und bei Bedarf mit neuer Luft versorgt. Da demgegenüber die untere zweite Kammer 12 mit dem Spülventil 24 versehen ist, kann aus der unteren zweiten Kammer 12 überschüssige Luft entweichen und somit überschüssiger Druck abgelassen werden. Unter Verwendung der Zufuhrleitung 20 und des Spülventils 24 lässt sich besonders vorteilhaft der zuvor beschriebene Gleichgewichtszustand erzielen. Nach alledem handelt es sich also bei dem Gleichgewichtszustand um einen Zustand, in dem sich das Ventilelement 32 sozusagen von selbst in die besagte, die Öffnung 34 teilweise freigebenden Stellung regelt.

Der Magnetkörper 33 am Ventilelement 32 und das Steuerungselement 38 können bevorzugt jeweils magnetischen Werkstoff aufweisen, von dem ständig ein Magnetfeld nach Art eines Permanentmagneten ausgeht. Alternativ ist es aber auch möglich, entweder den Magnetkörper 33 oder das Steuerungselement 38 mit magnetisierbarem Werkstoff zu versehen, der sich dadurch auszeichnet, dass er nur dann magnetisch wird, wenn er in den Einflussbereich eines Magnetfeldes gelangt (man nennt dies auch ferromagnetische Eigenschaft).

Alternativ zu dem zuvor anhand der Figuren 2 und 3 beschriebenen Ausführungsbeispiel ist es aber auch denkbar, den Magnetkörper 33 und das Steuerungselement 38 auf magnetische Anziehung auszubilden und anzuordnen. Hierzu müsste das Ventilelement 32 an der zur unteren zweiten Kammer 12 weisenden Seite der mittleren Folienlage 5 und das Steuerungselement 38 an der oberen bzw. äußeren Folienlage 4 angeordnet sein. In so einem Fall wird durch die magnetische Anziehungskraft das Ventilelement auf in Richtung seine Schließstellung beaufschlagt. Wird durch Luftzufuhr der Druck in der oberen ersten Kammer 10 größer, kann dadurch der Abstand zwischen dem Steuerungselement und dem Magnetplättchen am Ventilelement zunehmen und somit die magnetische Anziehungskraft abnehmen, bis das Absperrelement durch den in der oberen ersten Kammer 10 ansteigenden Druck in Richtung auf seine Öffnungsstellung beaufschlagt wird. Die dadurch bedingte Reduktion des Druckes in der oberen ersten Kammer 10 und der relative Anstieg des Druckes in der unteren zweiten Kammer 12 hat zur Folge, dass der Abstand zwischen der oberen bzw. äußeren Folienlage 4 und der mittleren Folienlage 5 abnehmen, das Magnetplättchen des Ventilelementes wieder in den Einflussbereich des Steuerungselementes an der oberen bzw. äußeren Folienlage 4 gelangen und somit die magnetische Anziehungskraft wieder wirksam werden kann, wodurch das Ventilelement wieder in Richtung auf seine Schließstellung beaufschlagt wird. Dabei kann sich in ähnlicher Weise, wie zuvor beschrieben, ein Gleichgewicht einstellen, in dem das Ventilelement 32 in einer die Öffnung 34 teilweise freigebenden Stellung gehalten wird.

## Patentansprüche

1. Ventil zur Regelung des Einlasses und/oder Auslasses eines fluiden Mediums, insbesondere Luft, in mindestens einen bzw. aus mindestens einem zwischen einer ersten Folienlage (5) und einer zweiten Folienlage (6) eines Folienkissens eines Gebäudeumhüllungselementes gebildeten, im Wesentlichen fluiddicht geschlossenen ersten Hohlraum (12), in dem das fluide Medium mit einem Druck beaufschlagt ist, mit einem an der ersten Folienlage (5) anbringbaren Ventilelement (32), das gegenüber einer in der ersten Folienlage (5) vorgesehenen Öffnung (34) bewegbar ausgebildet ist, und mit einem Steuerungselement (38), das ausgebildet ist, das Ventilelement (32) gegenüber der Öffnung (34) zu bewegen oder in einer die Öffnung (34) zumindest teilweise freigebenden ersten Stellung zu halten, wobei das Steuerungselement (38) zur Anordnung an der zweiten Folienlage (6) in einem Abstand vom Ventilelement (32) ausgebildet ist, **dadurch gekennzeichnet, dass** das Ventilelement (32) magnetisierbares Material und das Steuerungselement (38) magnetisches Material aufweist oder das Ventilelement (32) magnetisches Material und das Steuerungselement (38) magnetisierbares Material aufweist oder das Ventilelement (32) und das Steuerungselement (38) jeweils magnetisches Material aufweisen.

2. Ventil nach Anspruch 1, **dadurch gekennzeichnet, dass** das Ventilelement (32) relativ zur Öffnung (34) zwischen der ersten Stellung und einer zweiten Stellung verbringbar ist, wobei es die Öffnung (34) in der ersten Stellung stärker als in der zweiten Stellung freigibt.

3. Ventil nach Anspruch 2, **dadurch gekennzeichnet, dass** der Abstand zumindest eines freien Endes (32b) des Ventilelementes (32) von der Öffnung (34) in der ersten Stellung größer als in der zweiten Stellung ist.

4. Ventil nach Anspruch 3, **dadurch gekennzeichnet, dass** das Steuerungselement (38) ausgebildet ist, eine Bewegung des Ventilelementes (32) zu bewirken, wenn der Abstand zwischen dem Ventilelement (32) und dem Steuerungselement (38) einen vorgegebenen Schwellwert erreicht.

5. Ventil nach mindestens einem der Ansprüche 2 bis 4, **dadurch gekennzeichnet, dass** das Ventilelement (32) in seine erste Stellung in einer Richtung vom Steuerungselement (38) weg und in seine zweite Stellung in Richtung auf das Steuerungselement (38) zu verbringbar ist.

6. Ventil nach den Ansprüchen 4 und 5, **dadurch gekennzeichnet, dass** das magnetische Material eine abstoßende Kraft erzeugt, durch die das Ventilelement (32) in seine erste Stellung verbracht wird, wenn der Abstand zum Steuerungselement (38) den vorgegebenen Schwellwert unterschreitet.

7. Ventil nach den Ansprüchen 4 und 5, **dadurch gekennzeichnet, dass** das magnetische Material eine Anziehungskraft erzeugt, durch die das Ventilelement in seine zweite Stellung verbracht wird, wenn dessen Abstand zum Steuerungselement den vorgegebenen Schwellwert unterschreitet.

8. Ventil nach mindestens einem der Ansprüche 2 bis 4, **dadurch gekennzeichnet, dass** das Ventilelement in seine erste Stellung in Richtung auf das Steuerungselement und in seine zweite Stellung in einer Richtung vom Steuerungselement weg verbringbar ist.

9. Ventil nach Ansprüchen 4 und 8, **dadurch gekennzeichnet, dass** das magnetische Material eine abstoßende Kraft erzeugt, durch die das Ventilelement in seine zweite Stellung verbracht wird, wenn dessen Abstand zum Steuerungselement den vorgegebenen Schwellwert unterschreitet.

10. Ventil nach Ansprüchen 4 und 8, **dadurch gekennzeichnet, dass** das magnetische Material eine Anziehungskraft erzeugt, durch die das Ventilelement in seine erste Stellung verbracht wird, wenn dessen Abstand zum Steuerungselement den vorgegebenen Schwellwert unterschreitet.

11. Ventil nach mindestens einem der vorangegangen Ansprüche, **dadurch gekennzeichnet, dass** das Ventilelement (32) zwischen einer maximalen Öffnungsstellung, in der die Öffnung (34) im Wesentlichen vollständig freigegeben ist, und einer Schließstellung, in der die Öffnung (34) vom Ventilelement (32) verschlossen wird, verbringbar ist.

12. Ventil nach Anspruch 11, **dadurch gekennzeichnet, dass** sich die erste Stellung zwischen der Schließstellung und der maximalen Öffnungsstellung befindet.

13. Ventil nach den Ansprüchen 2 und 12, **dadurch gekennzeichnet, dass** sich die zweite Stellung des Ventilelementes (32) zwischen der Schließstellung und der maximalen Öffnungsstellung befindet.

14. Ventil nach den Ansprüchen 2 und 11, **dadurch gekennzeichnet, dass** die erste Stellung des Ventilelementes (32) die maximale Öffnungsstellung und die zweite Stellung des Ventilelementes (32) die Schließstellung bildet.

15. Ventil nach mindestens einem der vorangegangenen Ansprüche, **dadurch gekennzeichnet, dass** das Ventilelement (32) zur beweglichen Anordnung an der ersten Folienlage (5) ausgebildet ist.

16. Ventil nach Anspruch 15, **dadurch gekennzeichnet, dass** das magnetische oder magnetisierbares Material am Ventilelement (32) im Bereich dessen freien Endes (32b) oder benachbart zu dessen freiem Ende (32b) vorgesehen ist.

17. Ventil nach Anspruch 15 oder 16, **dadurch gekennzeichnet, dass** das Ventilelement (32) als flexible oder elastische Lasche ausgebildet ist, die mit ihrem einen Ende (32a) an der Folienlage (5) befestigbar und mit ihrem anderen Ende (32b) gegenüber der Öffnung (34) bewegbar ist.

18. Ventil nach mindestens einem der Ansprüche 15 bis 17, **dadurch gekennzeichnet, dass** das Ventilelement (32) zumindest abschnittsweise aus Folienmaterial hergestellt ist.

19. Gebäudeumhüllungselement mit einem Folienkissen, das eine erste Folienlage (5) und eine zweite Folienlage (6) aufweist, wobei die erste Folienlage (5) mit einer Öffnung (34) versehen ist, zwischen der ersten Folienlage (5) und der zweiten Folienlage (6) mindestens ein im Wesentlichen fluiddicht geschlossener erster Hohlraum (12) gebildet ist, in dem ein fluides Medium, insbesondere Luft, enthalten ist und das fluide Medium in dem mindestens einen ersten Hohlraum (12) mit einem Druck beaufschlagt ist, und mit einem Ventil (30) nach mindestens einem der vorangegangenen Ansprüche, dessen Ventilelement (32) gegenüber der Öffnung (34) in der ersten Folienlage (5) bewegbar und dessen Steuerungselement (38) an der zweiten Folienlage (6) angeordnet ist.

20. Gebäudeumhüllungselement nach Anspruch 19, mit einer dritten Folienlage (4), die die Außenseite einer Gebäudehülle bildet, während die zweite Folienlage (6) die Innenseite einer Gebäudehülle und die erste Folienlage (5) eine zwischen der zweiten Folienlage (6) und der dritten Folienlage (4) angeordnete mittlere Folienlage bildet, so dass zwischen der ersten Folienlage (5) und der zweiten Folienlage (6) eine erste Kammer (12) und zwischen der ersten Folienlage (5) und der dritten Folienlage (4) eine zweite Kammer (10) gebildet ist, sowohl die erste Kammer (12) als auch die zweite Kammer (10) im Wesentlichen fluiddicht geschlossen ist, sowohl in der ersten Kammer (12) als auch in der zweiten Kammer (10) ein fluides Medium, insbesondere Luft, enthalten ist und das fluide Medium in der ersten Kammer (12) mit einem ersten Druck und das fluide Medium in der zweiten Kammer (10) mit einem zweiten Druck beaufschlagt ist, **dadurch gekennzeichnet, dass** das mindestens eine Ventil (30) derart angeordnet ist, das es den Ein- und Auslass des Mediums in eine bzw. aus einer der beiden Kammern regelt.

21. Gebäudeumhüllungselement nach Anspruch 20, **dadurch gekennzeichnet, dass** das Ventilelement (32) des mindestens einen Ventils (30) an der mittleren ersten Folienlage (5) angeordnet ist und somit das Ventil (30) den Fluss des Mediums zwischen der zweiten Kammer (10) und der ersten Kammer (12) regelt.

## Claims

1. Valve for controlling the inlet and/or outlet of a fluid medium, in particular air, into at least one or out of at least one first hollow chamber (12), which is formed between a first foil layer (5) and a second foil layer (6) of a coil pillow of a building casing element and is closed to be essentially fluid-tight, in which hollow chamber the fluid medium is charged with pressure, with a valve element (32) attachable to the first foil layer (5), which valve element is designed to be movable relative to an opening (34) provided in the first foil layer (5), and with a control element (38) which is designed to move the valve element (32) relative to the opening (34) or to hold it in a first position at least partly releasing the opening (34), wherein the control element (38) is designed for arranging on the second foil layer (6) at a distance from the valve element (32),
**characterised in that** the valve element (32) comprises magnetisable material and the control element (38) comprises magnetic material or the valve element (32) comprises magnetic material and the control element (38) comprises magnetisable material or the valve element (32) and the control element (38) each comprise magnetic material.

2. Valve according to claim 1, **characterised in that** the valve element (32) can be moved relative to the opening (34) between the first position and a second position, wherein it releases the opening (34) further in the first position than in the second position.

3. Valve according to claim 2, **characterised in that** the distance at least of one free end (32b) of the valve element (32) from the opening (34) is greater in the first position than in the second position.

4. Valve according to claim 3, **characterised in that** the control element (38) is designed to bring about a movement of the valve element (32), when the distance between the valve element (32) and the control element (38) reaches a predefined threshold.

5. Valve according to at least one of claims 2 to 4, **characterised in that** the valve element (32) can be moved into its first position in a direction away from the control element (38) and into its second position in the direction of the control element (38).

6. Valve according to claims 4 and 5, **characterised in that** the magnetic material generates a repelling force by means of which the valve element (32) is moved into its first position, when the distance to the control element (38) falls below the predefined threshold.

7. Valve according to claims 4 and 5, **characterised in that** the magnetic material generates a force of attraction, by means of which the valve element is moved into its second position, when its distance from the control element falls below the predefined threshold.

8. Valve according to at least one of claims 2 to 4, **characterised in that** the valve element can be moved into its first position in the direction of the control element and into its second position in a direction away from the control element.

9. Valve according to claims 4 and 8, **characterised in that** the magnetic material generates a repelling force, by means of which the valve element is moved into its second position, when its distance from the control element falls below the predefined threshold.

10. Valve according to claims 4 and 8, **characterised in that** the magnetic material generates a force of attraction, by means of which the valve element is moved into its first position, when its distance from the control element falls below the predefined threshold.

11. Valve according to at least one of the preceding claims, **characterised in that** the valve element (32) can be moved between a maximum open position, in which the opening (34) is essentially fully released and a closed position in which the opening (34) is closed by the valve element (32).

12. Valve according to claim 11, **characterised in that** the first position is located between the closed position and the maximum open position.

13. Valve according to claims 2 and 12, **characterised in that** the second position of the valve element (32) is located between the closed position and the maximum open position.

14. Valve according to claims 2 and 11, **characterised in that** the first position of the valve element (32) forms the maximum open position and the second position of the valve element (32) forms the closed position.

15. Valve according to at least one of the preceding claims, **characterised in that** the valve element (32) is designed for movable arrangement on the first foil layer (6).

16. Valve according to claim 15, **characterised in that** the magnetic or magnetisable material on the valve element (32) is provided in the region of its free end (32b) or adjacent to its free end (32b).

17. Valve according to claim 15 or 16, **characterised in that** the valve element (32) is designed as a flexible or elastic tab, which can be secured at one end (32a) onto the foil layer (5) and can be moved at its other end (32b) relative to the opening (34).

18. Valve according to at least one of claims 15 to 17, **characterised in that** the valve element (32) is made at least partly from foil material.

19. Building casing element with a foil pillow, which has a first foil layer (5) and a second foil layer (6), wherein the first foil layer (5) is provided with an opening (34), between the first foil layer (5) and the second foil layer (6) at least one first hollow chamber (12), which is closed to be essentially fluid-tight, is formed, in which hollow chamber a fluid medium, in particular air, is contained, and the fluid medium in the at least one first hollow chamber (12) is charged with pressure, and with a valve (30) according to at least one of the preceding claims, the valve element (32) of which can be moved relative to the opening (34) in the first foil layer (5) and the control element (38) of which is arranged on the second foil layer (6).

20. Building casing element according to claim 19, comprising a third foil layer (4), which forms the outside of a building casing, whereas the second foil layer (6) forms the inside of a building casing and the first foil layer (5) forms a middle foil layer arranged between the second foil layer (6) and the third foil layer (4), so that between the first foil layer (5) and the second foil layer (6) a first chamber (12) is formed and between the first foil layer (5) and the third foil layer (4) a second chamber (10) is formed, both the first chamber (12) and also the second chamber (10) are closed to be essentially fluid-tight, both in the first chamber (12) and also in the second chamber (10) a fluid medium, in particular air, is contained and the fluid medium in the first chamber (12) is charged with a first pressure and the fluid medium in the second chamber (10) is charged with a second pressure, **characterised in that** the at least one valve (30) is arranged such that it controls the inlet and the outlet of medium into or out of one of the two chambers.

21. Building casing element according to claim 20, **characterised in that** the valve element (32) of the at least one valve (30) is arranged on the middle first foil layer (5) and thus the valve (30) controls the flow of medium between the second chamber (10) and the first chamber (12).

## Revendications

1. Soupape de régulation de l'entrée et/ou de la sortie d'un agent fluide, en particulier de l'air, dans au moins un ou d'au moins un premier espace creux (12) formé entre une première couche de film (5) et une deuxième couche de film (6) d'un coussin de film d'un élément de revêtement de bâtiment, fermé de manière sensiblement étanche au fluide, dans lequel l'agent fluide est alimenté en une pression, avec un élément de soupape (32) pouvant être monté au niveau de la première couche de film (5) qui est réalisé de manière mobile par rapport à une ouverture (34) prévue dans la première couche de film (5), et avec un élément de commande (38) qui est réalisé afin de déplacer l'élément de soupape (32) par rapport à l'ouverture (34) ou de le maintenir dans une première position libérant au moins partiellement l'ouverture (34), dans laquelle l'élément de commande (38) est réalisé pour l'agencement au niveau de la deuxième couche de film (6) à une distance de l'élément de soupape (32), **caractérisée en ce que** l'élément de soupape (32) présente du matériau magnétisable et l'élément de commande (38) présente du matériau magnétique ou l'élément de soupape (32) présente du matériau magnétique et l'élément de commande (38) présente du matériau magnétisable ou l'élément de soupape (32) et l'élément de commande (38) présentent respectivement du matériau magnétique.

2. Soupape selon la revendication 1, **caractérisée en ce que** l'élément de soupape (32) peut passer par rapport à l'ouverture (34) entre la première position et une seconde position, dans laquelle il libère l'ouverture (34) dans la première position plus fortement que dans la seconde position.

3. Soupape selon la revendication 2, **caractérisée en ce que** la distance entre au moins une extrémité libre (32b) de l'élément de soupape (32) et l'ouverture (34) dans la première position est plus grande que dans la seconde position.

4. Soupape selon la revendication 3, **caractérisée en ce que** l'élément de commande (38) est réalisé afin de provoquer un déplacement de l'élément de soupape (32) lorsque la distance entre l'élément de soupape (32) et l'élément de commande (38) atteint une valeur seuil prescrite.

5. Soupape selon au moins l'une des revendications 2 à 4, **caractérisée en ce que** l'élément de soupape (32) peut passer dans sa première position dans une direction loin de l'élément de commande (38) et dans sa seconde position en direction de l'élément de commande (38).

6. Soupape selon les revendications 4 et 5, **caractérisée en ce que** le matériau magnétique génère une force de rejet par laquelle l'élément de soupape (32) est passé dans sa première position lorsque la distance par rapport à l'élément de commande (38) n'atteint pas la valeur seuil prescrite.

7. Soupape selon les revendications 4 et 5, **caractérisée en ce que** le matériau magnétique génère une force d'attraction par laquelle l'élément de soupape est passé dans sa seconde position lorsque sa distance par rapport à l'élément de commande n'atteint pas la valeur seuil prescrite.

8. Soupape selon au moins l'une des revendications 2 à 4, **caractérisée en ce que** l'élément de soupape peut passer dans sa première position en direction de l'élément de commande et dans sa seconde position dans une direction loin de l'élément de commande.

9. Soupape selon les revendications 4 et 8, **caractérisée en ce que** le matériau magnétique génère une force de rejet par laquelle l'élément de soupape est passé dans sa seconde position lorsque sa distance par rapport à l'élément de commande n'atteint pas la valeur seuil prescrite.

10. Soupape selon les revendications 4 et 8, **caractérisée en ce que** le matériau magnétique génère une force d'attraction par laquelle l'élément de soupape est passé dans sa première position lorsque sa distance par rapport à l'élément de commande n'atteint pas la valeur seuil prescrite.

11. Soupape selon au moins l'une des revendications précédentes, **caractérisée en ce que** l'élément de soupape (32) peut passer entre une position d'ouverture maximale dans laquelle l'ouverture (34) est libérée sensiblement complètement, et une position de fermeture dans laquelle l'ouverture (34) est fermée par l'élément de soupape (32).

12. Soupape selon la revendication 11, **caractérisée en ce que** la première position se trouve entre la position de fermeture et la position d'ouverture maximale.

13. Soupape selon les revendications 2 et 12, **caractérisée en ce que** la seconde position de l'élément de soupape (32) se trouve entre la position de fermeture et la position d'ouverture maximale.

14. Soupape selon les revendications 2 et 11, **caractérisée en ce que** la première position de l'élément de soupape (32) forme la position d'ouverture maximale et la seconde position de l'élément de soupape (32) forme la position de fermeture.

15. Soupape selon au moins l'une des revendications précédentes, **caractérisée en ce que** l'élément de soupape (32) est réalisé pour l'agencement mobile au niveau de la première couche de film (5).

16. Soupape selon la revendication 15, **caractérisée en ce que** le matériau magnétique ou magnétisable est prévu au niveau de l'élément de soupape (32) dans la zone de son extrémité libre (32b) ou de manière contiguë à son extrémité libre (32b).

17. Soupape selon la revendication 15 ou 16, **caractérisée en ce que** l'élément de soupape (32) est réalisé comme languette flexible ou élastique qui peut être fixée avec une extrémité (32a) à la couche de film (5) et est mobile avec son autre extrémité (32b) par rapport à l'ouverture (34).

18. Soupape selon au moins l'une des revendications 15 à 17, **caractérisée en ce que** l'élément de soupape (32) est fabriqué au moins par section en un matériau de film.

19. Élément de revêtement de bâtiment avec un coussin de film qui présente une première couche de film (5) et une deuxième couche de film (6), dans lequel la première couche de film (5) est pourvue d'une ouverture (34), au moins un premier espace creux (12) fermé de manière sensiblement étanche au fluide est formé entre la première couche de film (5) et la deuxième couche de film (6), dans lequel un agent fluide, en particulier de l'air, est contenu et l'agent fluide est alimenté en une pression dans l'au moins un premier espace creux (12), et avec une soupape (30) selon au moins l'une des revendications précédentes, dont l'élément de soupape (32) est mobile par rapport à l'ouverture (34) dans la première couche de film (5) et dont l'élément de commande (38) est agencé au niveau de la deuxième couche de film (6).

20. Élément de revêtement de bâtiment selon la revendication 19, avec une troisième couche de film (4) qui forme le côté extérieur d'une enveloppe de bâtiment alors que la deuxième couche de film (6) forme le côté intérieur d'une enveloppe de bâtiment et la première couche de film (5) forme une couche de film médiane agencée entre la deuxième couche de film (6) et la troisième couche de film (4) de sorte qu'entre la première couche de film (5) et la deuxième couche de film (6) une première chambre (12) soit formée et entre la première couche de film (5) et la troisième couche de film (4) une seconde chambre (10) soit formée, non seulement la première chambre (12) mais aussi la seconde chambre (10) sont fermées de manière sensiblement étanche au fluide, non seulement dans la première chambre (12) mais aussi dans la seconde chambre (10) un agent fluide, en particulier de l'air, est contenu et l'agent fluide dans la première chambre (12) est alimenté en une première pression et l'agent fluide dans la seconde chambre (10) est alimenté en une seconde pression, **caractérisé en ce que** l'au moins une soupape (30) est agencée de telle manière qu'elle régule l'entrée et la sortie de l'agent dans une ou hors d'une des deux chambres.

21. Élément de revêtement de bâtiment selon la revendication 20, **caractérisé en ce que** l'élément de soupape (32) de l'au moins une soupape (30) est agencé au niveau de la première couche de film (5) médiane et ainsi la soupape (30) régule le flux de l'agent entre la seconde chambre (10) et la première chambre (12).
